# EUROPEAN PATENT APPLICATION

(11) **EP 1 160 684 A2**
(43) Date of publication of application: **05.12.2001**
(21) Application number: 01111057.4
(22) Date of filing: 08.05.2001
(51) Int. Cl.: G06F 17/30

(54) **Contents distribution system, requesting device, providing device, recording medium, information aggregate and media**

(30) Priority: 09.05.2000 JP 2000135285
(71) Applicant: MATSUSHITA ELECTRIC INDUSTRIAL CO., LTD., Kadoma-shi, Osaka 571-8501 (JP)
(72) Inventor: Douzono, Takeshi, Osaka-shi, Osaka 535-0011 (JP)
(74) Representative: Grünecker, Kinkeldey, Stockmair & Schwanhäusser Anwaltssozietät

(57) **Abstract**

A contents distribution system has a requesting device for making a request for distribution of the contents, and a providing device for providing the contents in accordance with the request from the requesting device, characterized in that;
the requesting device reads the conditional information from the recording medium storing the conditional information for choosing the contents;
the read conditional information is sent directly or indirectly to the providing device; and
the providing device chooses and specifies the contents in accordance with the sent conditional information to prepare the requesting device to download the contents.

## Description

### BACKGROUND OF THE INVENTION

### Field of the Invention

The present invention relates to a contents distribution system for distributing contents such as music , popular songs , movie, or television programs, a requesting device, a providing device, a recording medium, an information aggregate and media.

### Related Art of the Invention

At present, a variety of contents such as music, popular songs, movie, or television programs are widely spread, and can be purchased and listened and viewed at home.

For example, in purchasing a music CD, a user visits a music shop or rental shop and purchases the CD containing a desired song. Then, the user can bring the purchased CD home, reproduce it, and take pleasure in the music. Also, at the media shop or rental shop, the user can purchase or rent the contents such as a movie stored in a DVD or a tape medium.

Recently, the distribution of sound data that is compressed in accordance with the MPEG Audio Layer 3 method, employing the Internet, is popular. The user makes access to a home page of the dealer of the Internet, designates a desired song, downloads the sound data, and records it on the recording medium. And the user can take pleasure in the music by reproducing the sound data recorded on the recording medium.

Also, the contents distribution equipment for distributing the contents is installed, and the user can designate and purchase the desired contents from the contents distribution equipment.

In this way, a variety of contents are distributed in various ways, and the user can purchase the contents in accordance with the tastes or needs. Also, the user can make dubbing of the contents on the blank media by operating the equipment such as a recorder.

By the way, there is a desire of purchasing the contents by specifying the category of contents, when the user wants to purchase any contents.

For example, in taking a popular song as the contents, it may be desired to obtain 10 songs in the orikon's best 10 for this week. Also, there is another desire of getting the songs of a certain singer residing in the orikon's best 100 songs for this week.

However, in the conventional distribution of contents, in order to procure 10 songs in the orikon's best 10 for this week, it is required to designate the titles of musical composition for the corresponding songs. Also, in purchasing the songs of a singer residing in the orikon's best 100 for this week, it is necessary that the orikon's best 100 for this week are investigated, the songs of the singer are selected from among the best 100 songs for this week, and the titles of musical composition are designated.

In the movies, there is a desire of procuring a movie on which a certain actor makes appearance among the movies broadcast in the past half to one year. In such a case, it is required to designate the title of movie to be procured.

Thus , in the conventional distribution of contents , when the contents are purchased by specifying the category of contents, it is necessary to designate the contents each time. That is, the conventional distribution of contents had a problem that a category of the contents can not be specified to procure the contents belonging to the category.

Also, in order to record the contents on the recording medium such as blank media in accordance with the tastes or needs, making use of the conventional contents distribution system, the user must first purchase or rent the master contents, and moreover perform some operations to make recording or dubbing of the contents on the medium by operating the equipment.

That is, the conventional contents distribution system had a problem that it takes some labor to record the contents on the recording medium in accordance with the tastes or needs of the user.

### SUMMARY OF THE INVENTION

The present invention has been achieved in the light of the above problem that the user can not obtain the contents belonging to a certain category by designating the category of contents in the conventional contents distribution system, and it is an object of the invention to provide a contents distribution system, a requesting device, a providing device, a recording medium, an information aggregate and the media in which a category of contents can be designated to procure the contents belonging to the category.

Also, in view of the above problem that the user takes some operations to record the contents on the recording medium in accordance with the tastes or needs in the conventional contents distribution system, it is another object of the invention to provide a contents distribution system, a requesting device, a providing device, a recording medium, an information aggregate and the media in which the user can record the contents on the recording medium in accordance with the tastes or needs in a simple manner.

The 1st invention of the present invention (corresponding to claim 1) is a contents distribution system comprising a requesting device for making a request for distribution of the contents , and a providing device for providing the contents in accordance with said request from said requesting device, characterized in that;
said requesting device reads the conditional information from the recording medium storing said conditional information for choosing the contents;
said read conditional information is sent directly or indirectly to said providing device; and
said providing device chooses and specifies the contents in accordance with said sent conditional information to prepare said requesting device to download the contents.

The 2nd invention of the present invention (corresponding to claim 2) is the contents distribution system according to 1st invention, characterized in that if said requesting device makes a request, said specified contents are sent from said contents providing device to said requesting device.

The 3rd invention of the present invention (corresponding to claim 3) is the contents distribution system according to 1st invention, characterized in that said providing device sends said specified contents to said requesting device.

The 4th invention of the present invention (corresponding to claim 4) is the contents distribution system according to any one of 1st to 3rd inventions, characterized in that said conditional information has been stored when said recording medium is purchased.

The 5th invention of the present invention (corresponding to claim 5) is the contents distribution system according to any one of 1st to 3rd inventions, characterized in that said conditional information is stored directly in said recording medium by the user.

The 6th invention of the present invention (corresponding to claim 6) is the contents distribution system according to any one of 1st to 5th inventions, characterized in that the acquisition information for acquiring said specified contents is stored in said recording medium.

The 7th invention of the present invention (corresponding to claim 7) is the contents distribution system according to 6th invention, characterized in that said acquisition information is sent from said providing device.

The 8th invention of the present invention (corresponding to claim 8) is the contents distribution system according to 7th or 8th inventions, characterized in that said acquisition information is the information containing at least one of the billing information of said specified contents, the privilege term information that is the time limit till which said specified contents can be downloaded, and the location information indicating the location at which said specified contents are stored.

The 9th invention of the present invention (corresponding to claim 9) is the contents distribution system according to any one of 1st to 8th inventions, characterized in that when the same conditional information is sent multiple times from said requesting device, said providing device selects and specifies only the contents different from the previously specified contents.

The 10th invention of the present invention (corresponding to claim 10) is the contents distribution system according to any one of 1st to 9th inventions, characterized in that said providing device is capable to interpret said conditional information.

The 11th invention of the present invention (corresponding to claim 11) is the contents distribution system according to any one of 1st to 10th inventions, characterized in that said recording medium is detachably mounted on said requesting device.

The 12th invention of the present invention (corresponding to claim 12) is the contents distribution system according to any one of 1st to 10th inventions, characterized in that said recording medium is incorporated into said requesting device.

The 13th invention of the present invention (corresponding to claim 13) is a requesting device for making a request for distribution of the contents, comprising:
reading means of reading the conditional information from the recording medium storing said conditional information for choosing the contents; and
sending means of sending said read conditional information directly or indirectly to said providing device for providing the contents;
characterized in that said contents providing device chooses and specifies the contents in accordance with said sent conditional information to prepare said requesting device to download the contents.

The 14th invention of the present invention (corresponding to claim 14) is a providing device for providing the contents, comprising:
specifying means of choosing and specifying the contents in accordance with the conditional information sent from a requesting device, having reading means of reading the conditional information from the recording medium storing said conditional information for choosing the contents, and sending means of sending said read conditional information directly or indirectly to said providing device; and
preparing means of preparing said requesting device to download the specified contents.

The 15th invention of the present invention (corresponding to claim 15) is a recording medium storing the conditional information for selecting the contents, wherein
said conditional information is read by a requesting device for making a request for distribution of the contents;
said read conditional information is sent directly or indirectly to a providing device for providing the contents; and
said providing device chooses and specifies the contents in accordance with said sent conditional information to prepare said requesting device to download the contents.

The 16th invention of the present invention (corresponding to claim 16) is a medium holding a program and/or the data with which the computer can perform part or all of the functions for said contents distribution system, said requesting device and said providing device according to any one of 1st to 15th inventions, characterized in that said medium can be handled on the computer.

The 17th invention of the present invention (corresponding to claim 17) is an information aggregate which is a program and/or the data with which the computer can perform part or all of the functions for said contents distribution system, said requesting device and said providing device according to any one of 1st to 15th inventions.

### BRIEF DESCRIPTION OF THE DRAWINGS

### [FIG. 1]

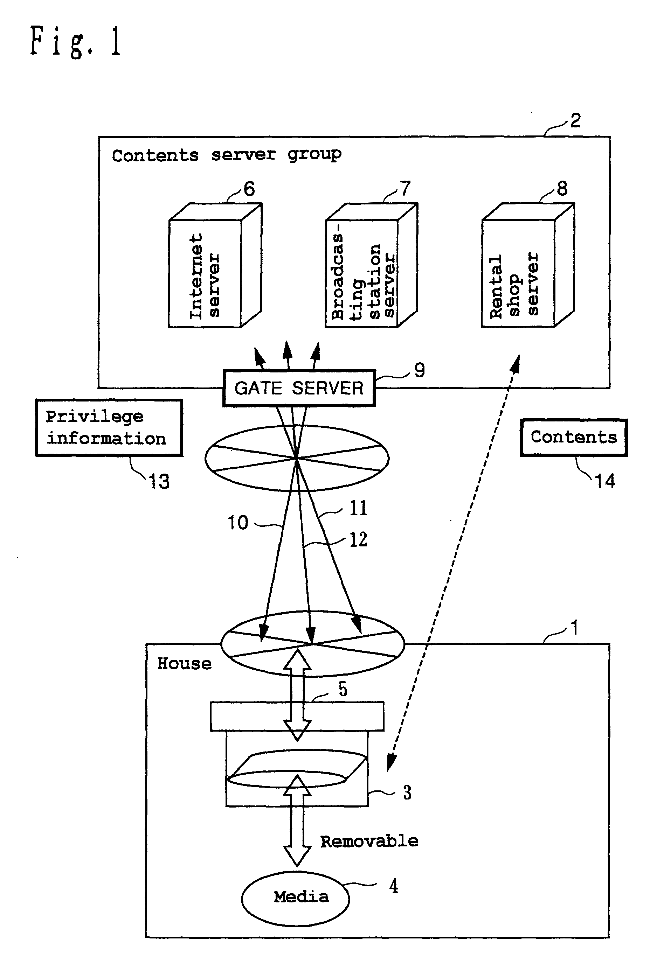

FIG. 1 is a diagram showing the configuration of a contents distribution system in the first and second embodiments of the invention.

### [FIG. 2]

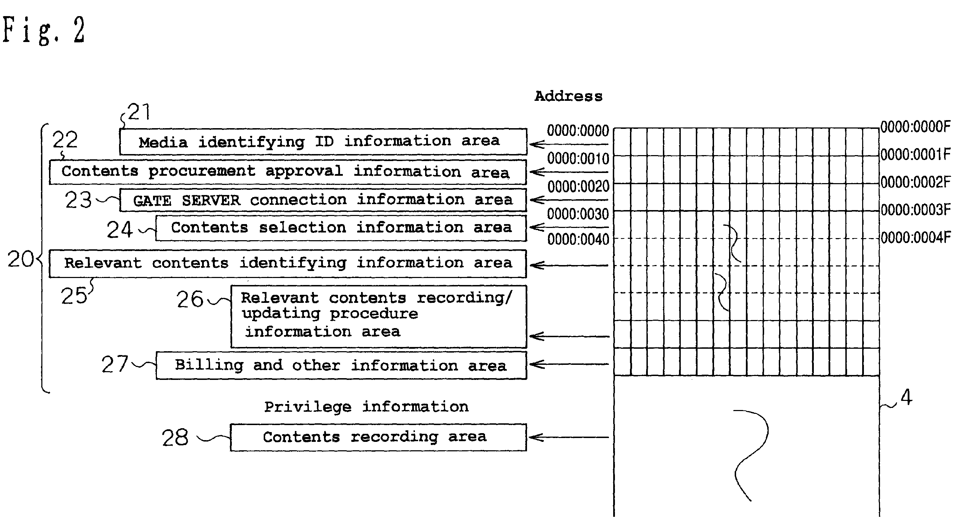

FIG. 2 is a diagram showing a recording area of the media 4 in the first and second embodiments of the invention.

### [FIG. 3]

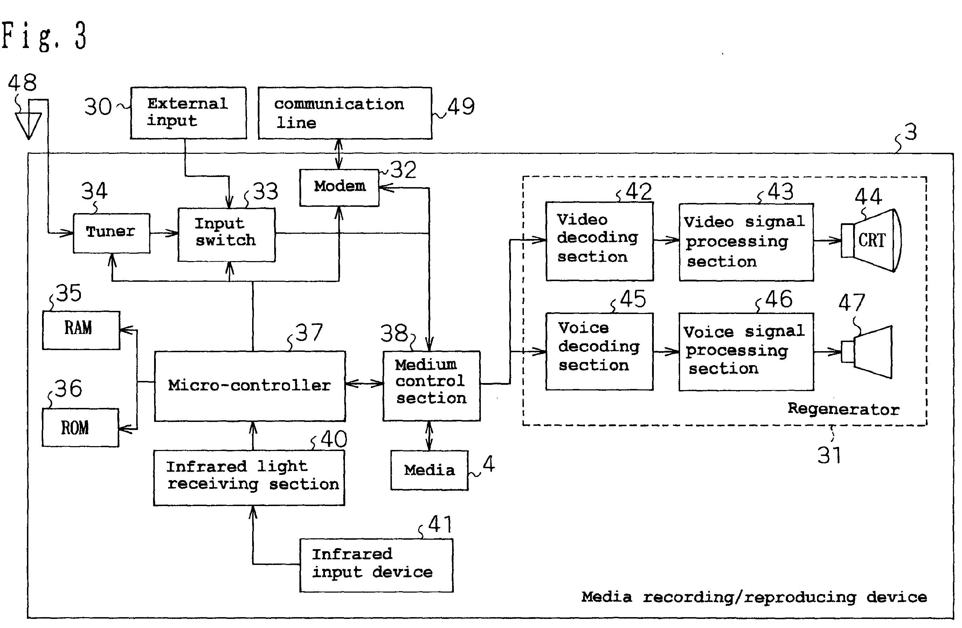

FIG. 3 is a block diagram showing the configuration of a media recording/reproducing device in the first and second embodiments of the invention.

### [FIG. 4]

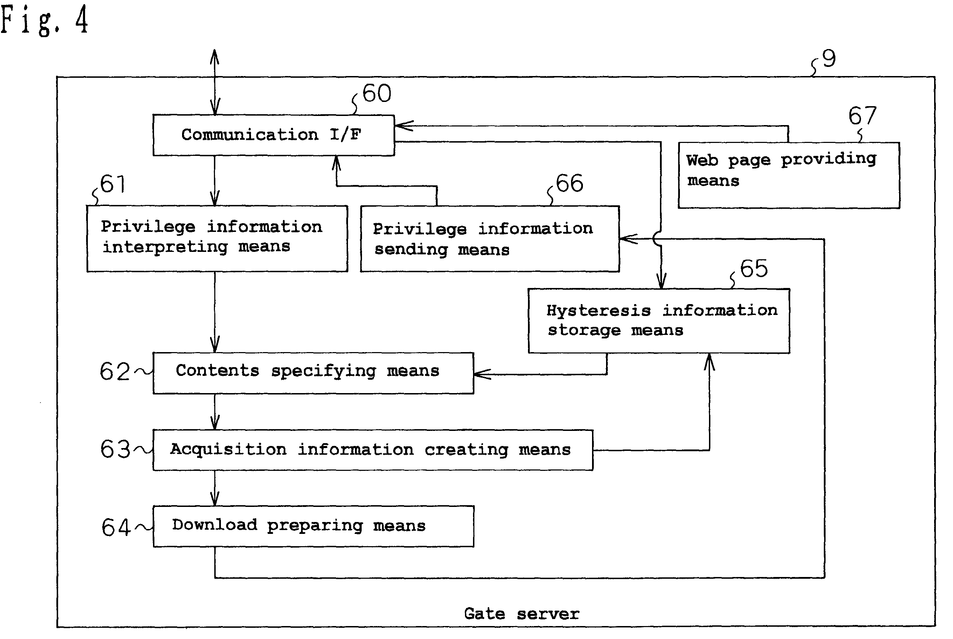

FIG. 4 is a block diagram showing the configuration of a gate server in the first and second embodiments of the invention.

### [FIG. 5]

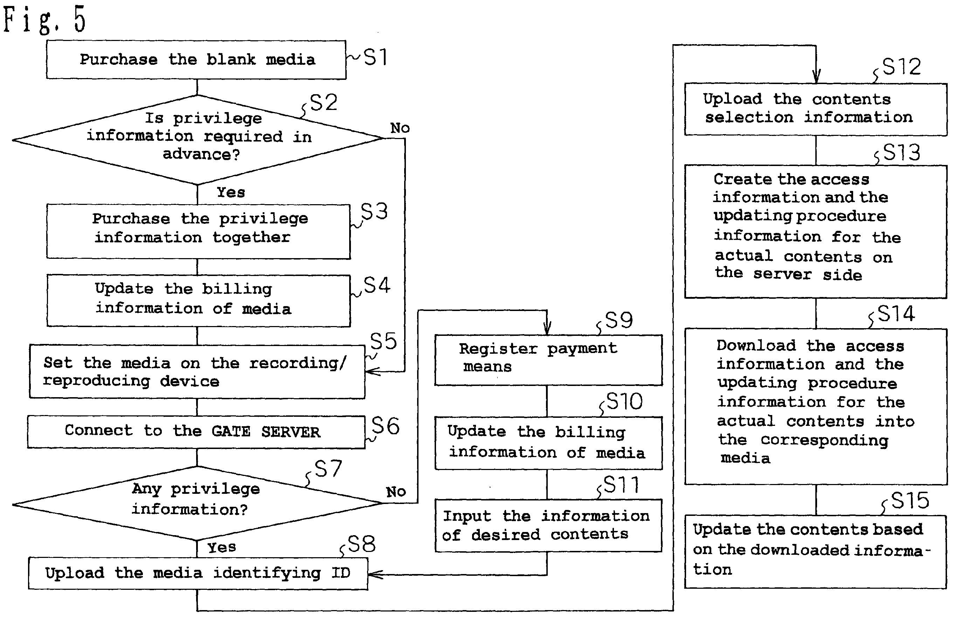

FIG. 5 is a flowchart for explaining the operation in the first and second embodiments of the invention.

### [FIG. 6]

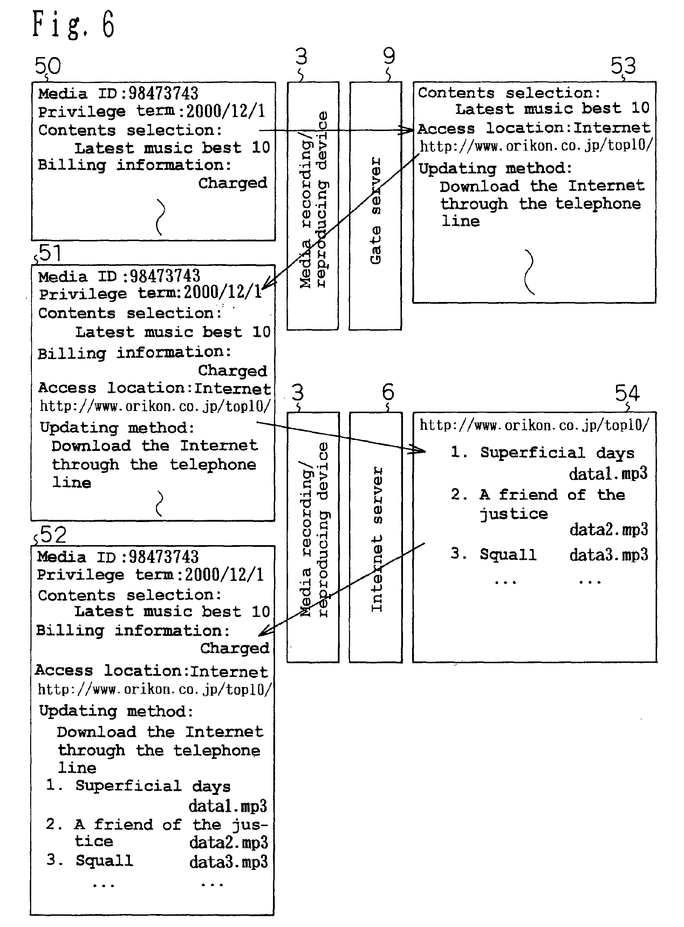

FIG. 6 is a diagram for explaining the information recorded on the media in the first and second embodiments of the invention.

### Description of Symbols

- 1: House
- 2: Contents server group
- 3: Media recording/reproducing device
- 4: Media
- 5: Communication I/F
- 6: Internet server
- 7: Broadcasting station server
- 8: Rental shop server
- 9: Gate server
- 10: Telephone line
- 11: Cable
- 12: Satellite communication
- 13: Privilege information
- 14: Contents
- 20: Privilege information area
- 21: Media identifying ID information area
- 22: Contents procurement approval information area
- 23: Gate server connection information area
- 24: Contents selection information area
- 25: Relevant contents selection information area
- 26: Relevant contents recording/updating procedure information
- 27: Billing and other information
- 28: Contents recording area
- 30: External input
- 31: Regenerator
- 32: Modem
- 33: Input switch
- 34: Tuner
- 35: RAM
- 36: ROM
- 37: Micro-controller
- 38: Medium control section
- 40: Infrared light receiving section
- 41: Infrared input device
- 42: Video decoding section
- 43: Video signal processing section
- 44: CRT
- 45: Voice decoding section
- 46: Voice signal processing section
- 47: Speaker
- 48: Antenna
- 49: Communication line
- 50: Blank media with privilege
- 51: Blank media with privilege
- 52: Blank media with privilege
- 53: Acquisition information
- 54: Contents
- 60: Communication I/F
- 61: Privilege information interpreting means
- 62: Contents specifying means
- 63: Acquisition information creating means
- 64: Download preparing means
- 65: Hysteresis information storage means
- 66: Privilege information sending means
- 67: Web page providing means

### PREFERRED EMBODIMENTS OF THE INVENTION

Preferred embodiments of the present invention will be described below with reference to the accompanying drawings.

### (First embodiment)

First of all, a first embodiment of the invention will be described below.

FIG. 1 shows a configuration of a contents distribution system according to the first embodiment of the invention.

The contents distribution system comprises a contents server group 2, a media recording/reproducing device 3, and the media 4. The contents server group 2 and the media recording device 3 are connected via the communication line such as a telephone line 10, a cable 11, or a satellite communication 12.

The contents server group 2 consists of a group of servers including an Internet server 6, a broadcasting station server 7, a rental shop server 8, and a gate server 9.

The media recording/reproducing device 3 is placed in a house 1, and equipped with a communication I/F 5.

The privilege information 13 is the information recorded on the media 4, including the conditional information for choosing the contents and the acquisition information for acquiring the contents. That is, the conditional information is stored beforehand in the media 4, and the acquisition information is created by the gate server 9 on the basis of the conditional information and stored in the media 4.

The contents 14 are distributed from the contents server group 2 to the media recording/reproducing device 3.

The Internet server 6 constituting the contents server group 2 is connected to the Internet, stores the contents to be distributed, and transfers the designated contents via the Internet upon accepting a request for distributing the contents.

The broadcasting station server 7 is installed in a broadcasting station for making the satellite broadcasting, stores the contents to be distributed, and distributes the contents using the satellite communication 12.

The rental shop server 8, which is installed in the rental shop to store the contents to be distributed, serves to record the designated contents on the media 4 upon accepting a request for distributing the contents and sell the privilege information 13 for acquiring the contents to the user.

The gate server 9 selects and specifies the contents in accordance with the privilege information 13 to prepare the media recording device 3 to download the contents, create the acquisition information for acquiring the contents as the privilege information 13, and transfer it to the media recording device 3, when the conditional information for choosing the contents among the privilege information 13 stored in the media 4 is sent from the media recording/reproducing device 3.

The media recording/reproducing device 3 reads the conditional information among the privilege information 13 from the recording medium storing the conditional information that is a part of the privilege information 13 for choosing the contents, transfers it to the gate server 9, records the acquisition information for acquiring the contents that is a part of the privilege information 13 sent from the gate server 9 on the media 4, downloads the contents from the contents server group 2 on the basis of the privilege information 13 recorded on the media 4, records it on the media 4, and reproduces the contents-recorded on the media 4.

The communication I/F 5 is used to make communication employing the communication lines such as the telephone line 10, the satellite communication 12 and the cable 11.

The media 4 is the recording medium for storing the privilege information 13 and the contents.

FIG. 2 shows what kinds of information are stored in the media 4 of this embodiment.

The media 4 comprises a privilege information area 20 for storing the privilege information 13 and a contents recording area 28 for recording the contents.

The privilege information area 20 is subdivided into a media identifying ID information area 21, a contents procurement approval information area 22, a gate server connecting information area 23, a contents selection information area 24, a relevant contents identifying information area 25, a relevant contents recording/updating procedure information area 26, and a billing and other information area 27.

The media identifying ID information area 21 stores the ID for identifying the media 4.

The contents procurement approval information area 22 stores the privilege term information for indicating the term allowing for the procurement of contents.

The gate server connecting information area 23 stores the address of the gate server 9 for connection to the gate server 9.

The contents selecting information area 24 stores the category information of the contents to be procured.

The relevant contents identifying information area 25 stores the information for identifying the contents belonging to the category of the contents to be procured and the source of procuring the contents.

The relevant contents recording/updating procedure information area 26 stores a procedure for recording or updating the contents belonging to the category of the contents to be procured in the media 4.

The billing and other information area 27 stores the billing information and the other information.

The contents recording area 28 stores the contents.

FIG. 3 shows the configuration of the media recording/reproducing device 3.

The media recording/reproducing device 3 is connected to an antenna 48 and a communication line 49, and can be input from an external input 30.

The antenna 48 is means of receiving the contents transmitted via a satellite communication 12 from a broadcasting station 7.

The external input 30 is means of inputting the contents from other reproducing devices.

The communication line 49 is the telephone line 10.

The media recording/reproducing device 3 comprises a modem 32, an input switch 33, a tuner 34, a RAM 35, a ROM 36, a micro-controller 37, a medium control section 38, an infrared receiving section 40, an infrared input device 41, a medium control section 38, the media 4, and a regenerator 31.

The regenerator 31 comprises a video decoding section 42, a video signal processing section 43, a CRT 44, a voice decoding section 45, a voice signal processing section 46, and a speaker 47.

The modem 32 is means of repeating the data from the contents server group 2 via the communication line 49.

The input switch 33 is means of switching between the data sent from the tuner 34 and the data passed from the external input 30.

The tuner 34 is means of receiving and demodulating the broadcast wave transmitted from the broadcasting station.

The RAM 35 is a readable and writable memory, and means of storing the information which the micro-controller 37 uses for the control.

The ROM 36 is a read-only memory, and means of recording the program which the micro-controller 37 uses for the control.

The micro-controller 37 executes a control program recorded in the ROM 36 to control the tuner 34, the input switch 33, the modem 32 and the medium control section 38 in accordance with an operation command input from the infrared light receiving section 40, and is means of reading or writing the information required for the control from or in the RAM 35.

The medium control section 38 is means of reading or writing the privilege information 13 or the contents from or in the media 4.

The infrared light receiving section 40 is means of receiving an operation command sent from the infrared input device 41.

The infrared input device 41 is a remote controller for inputting an operation command for operating the media recording device 3 and sending the input operation command to the infrared light receiving section 40 with the infrared ray.

The medium control section 38 is means of reading the privilege information 13 stored in the media 4 and outputting it to the modem 32, or recording the privilege information 13 or the contents output from the modem 32 on the media 4, or reading the contents recorded in the media 4 and outputting it to the regenerator 31.

The media 4 is means of storing the privilege information 13 or the contents.

The video decoding section 42 constituting the regenerator 31 is means of decoding the video data of the contents and outputting a video signal.

The video signal processing section 43 is means of making signal processing for the video signal output from the video decoding section 42.

The CRT 44 is means of displaying the video signal having undergone the signal processing.

The voice decoding section 45 is means of decoding the voice data of the contents and outputting a voice signal.

The voice signal processing section 46 is means of making signal processing for the voice signal output from the voice decoding section 45.

The speaker 47 is means of outputting the voice signal having undergone the signal processing as the voice.

Also,FIG. 4. shows the configuration of the gate server 9.

The gate server 9 comprises a communication I/F 60, privilege information interpreting means 61, contents specifying means 62, acquisition information creating means 63, download preparing means 64, hysteresis information storage means 65, privilege information sending means 66, and Web page providing means 67.

The communication I/F 60 is used for communicating via the telephone line 10 with the media recording/reproducing device 3 and communicating with the Internet server 6.

The privilege information interpreting means 61 is means of interpreting the contents of the privilege information 13 sent from the media recording/reproducing device 3.

The contents specifying means 62 is means of specifying the contents which the user downloads from the privilege information 13.

The acquisition information creating means 63 is means of creating the acquisition information that is a part of the privilege information 13.

The download preparing means 64 is means of preparing for the user to download the contents.

The hysteresis information storage means 65 is means of storing hysteresis downloaded by the user.

The privilege information sending means 66 is means of sending the acquisition information created by the acquisition information creating means 63 as the privilege information 13 to the media recording/reproducing device 3.

The Web page providing means 67 is means of providing the Web page for creating the conditional information when the user creates the conditional information that is a part of the privilege information 13.

Note that the media recording/reproducing device 3 of this embodiment is an example of the requesting device of the invention, the contents server group 2 of this embodiment is an example of the providing device of the invention, the privilege information 13 of this embodiment is an example of the conditional information, and the privilege information 13 of this embodiment is an example of the acquisition information of the invention.

The operation of this embodiment will be described below.

FIG. 5 shows a flowchart of the contents distribution system according to the invention, which will be described below.

It is supposed that the user tries to procure ten popular songs at present in the order from the first to tenth place. Namely, the user wants to procure the latest music best 10.

At step S1, the user goes to the rental shop to purchase the blank media as the media 4. In the rental shop, the blank media, i.e. , the media having no contents recorded, are sold. The blank media may be, for example, an optical magnetic disk or CD-R, or a semiconductor memory card. The user purchases the blank media in the rental shop.

At step S2, the user judges whether to purchase the privilege information 13 for procuring the best 10 for this week or the media 4 alone . The user may purchase the privilege information 13 in the rental shop or record the privilege information 13 on the media 4 employing the media recording/reproducing device 3 at one's house 1.

It is supposed that the user decides to purchase the privilege information 13 in the rental shop . An instance where the user records the privilege information 13 on the media 4 at one's house 1 will be described later.

At step S3, the user purchases the privilege information 13 for procuring the latest music best 10. The user inserts the media 4 into the rental shop server 8. The rental shop server 8 displays the contents selection information for selecting the contents on the monitor. If the user selects the latest music best 10 from it, the rental shop server 8 records the privilege information 13 for procuring the latest music best 10 on the media 4.

At step S4, the rental shop server 8 charges for the privilege information 13 that the user purchased, and if the user pays a fee, the rental shop server 8 updates the billing information for the privilege information 13 recorded on the media 4.

In this way, the privilege information 13 is recorded on the media 4. FIG. 6 shows the information recorded on the media 4 as the blank media with privilege 50.

The blank media with privilege 50 has a media ID of 98473743 recorded thereon. This is recorded in the media identifying ID information area 21 of FIG. 2 that is used to identify the media 4.

Also, the blank media with privilege 50 has a privilege term of 2000.12.1 recorded thereon. This is recorded in the contents procurement approval information area 22 of FIG. 2 to indicate the term for which the relevant contents can be procured, namely, indicate that the relevant contents can be procured till 2000.12.1.

Also, the latest best 10 is recorded as the selection of contents. This is recorded in the contents selection information area 24 of FIG. 2 to indicate the condition for selecting the contents. That is, ten songs that are most popular at present are selected from the first to tenth place.

Also, charged is recorded as the billing information. This is recorded in the billing and other information area 27 of FIG. 2 to indicate that the user paid a fee for the contents.

As indicated in the blank media with privilege 50, the privilege information 13 is only recorded in the media 4 at this time, and the contents are not recorded yet.

At step S5, the user sets the purchased media 4 on the media recording/reproducing device 3.

At step S6, the user enters an operation command prompting the user to procure the contents by operating the infrared input device 41 for the media recording/reproducing device 3 as shown in FIG. 3.

The infrared input device 41 sends the operation command entered by the user to the infrared light receiving section 40 with the infrared ray.

The infrared light receiving section 40 receives the sent operation command and notifies the micro-controller 37.

On one hand, the micro-controller 37 executes a control program recorded on the ROM 36 to control the medium control section 38, the tuner 34, the input switch 33 and the modem 32.

The micro-controller 37 instructs the medium control section 38 to connect to the gate server 9 upon receiving the operation command sent from the infrared light receiving section 40.

The medium control section 38 reads the address of the gate server 9 from the gate server connection information area 23 of the media 4 under the control of the micro-controller 37.

And the medium control section 38 sends a connection command to the modem 32 by designating the address of the gate server 9. The modem 32 passes the sent connection command via the communication line 49 to the gate server 9.

The gate server 9 permits the connection upon accepting the connection command sent from the media recording/reproducing device 3.

At step S7 , the micro-controller 37 instructs the media control section 38 to investigate the information stored in the media 4.

The medium control section 38 investigates the information stored in the media 4 under the control of the micro-controller 37. As a result, the medium control section 38 notifies the micro-controller 37 that the privilege information 13 is stored in the media 4. The routine proceeds to step S8.

At step S8, the micro-controller 37 instructs the medium control section 38 to upload the media identifying ID stored in the media 4.

Receiving this, the medium control section 38 reads the media identifying ID from the media identifying ID information area 21 of the media 4 and outputs it to the modem 32.

The modem 32 sends the media identifying ID output from the medium control section 38 via the communication line 49 to the gate server 9.

At step S12, the micro-controller 37 instructs the medium control section 38 to upload the contents selection information stored in the media 4.

Receiving this, the medium control section 38 reads the contents selection information from the contents selection information area 24 of the media 4 and outputs it to the modem 32. In this case, the contents selection information to be uploaded is the latest music best 10.

The modem 32 sends the contents selection information output from the medium control section 38 to the gate server 9.

At step S13, the gate server 9 receives the media identifying ID and the contents selection information, and then creates the access information for gaining access to the contents and the update procedure information for updating the contents.

In FIG. 4, the communication I/F 60 receives the media identifying ID passed from the media recording/reproducing device 3, and then stores it in the hysteresis information storage means 65. Also, the communication I/F 60 receives the contents selection information sent from the media recording/reproducing device 3, and then stores it in the hysteresis information storage means 65 as a pair with the media identifying ID, and outputs the contents selection information to the privilege information interpreting means 61.

The privilege information interpreting means 61 interprets the details of the contents selection information. That is, the privilege information interpreting means interprets the details of the latest music best 10, and notifies the contents specifying means 62 to designate ten popular songs at present from the first to tenth place.

The contents specifying means 62 specifies the songs of the latest music best 10.

The acquisition information creating means 63 creates the acquisition information for acquiring the ten songs among the privilege information 13. This acquisition information includes the billing information, the privilege term information, and the location information indicating the location at which the specified contents are stored. Among them, the billing information and the privilege term information are already recorded in the media 4. Accordingly, the acquisition information creating means 63 creates the location information or the URL of the server to be accessed to download the ten songs and an updating method indicating how to download. It is supposed that the server to be accessed is the Internet server 6 of FIG. 1. Moreover, the acquisition information creating means 63 stores the created acquisition information in the hysteresis information storage means 65.

FIG. 6 shows the acquisition information 53 created in the above way. The access location is the Internet, http://www.orikon.co.jp/top10/. And the updating method involves downloading the ten songs from the Internet, employing the telephone line.

Further, the download preparing means 64 issues an instruction to prepare for downloading the ten songs specified to the server storing the specified ten songs.

In FIG. 6, the acquisition information 53 is created in this way.

The privilege information sending means 66 issues an instruction to prepare for downloading to the server storing the specified ten songs, and further sends the acquisition information to the media recording/reproducing device 3.

The server storing the specified ten songs accepts a download preparing instruction sent from the gate server 9, and then prepares for downloading. That is, in a directory of top10, a music "superficial days" at the first place is prepared with a file name of data1.mp3, a music "a friend of the justice" at the second place is prepared with a file name of data2.mp3, and a music "squall" at the third place is prepared with a file name of data3.mp3.

At step S14, the media recording/reproducing device 3 downloads the acquisition information, and stores it in the media 4. That is, the modem 32 of the media recording/reproducing device 3 receives the acquisition information 53 sent from the gate server 9, and then outputs it to the medium control section 38.

The medium control section 38 stores the acquisition information 53 in the media 4. That is, "the Internet http://www.orikon.co.jp/top10/" for the access location is stored in the relevant contents identifying information area 25 of FIG. 2, and an updating method "Download from the Internet through the telephone line" is stored in the relevant contents recording/updating procedure information area 26. Consequently, the details of the media 4 are the blank media with privilege 51 of FIG. 6.

The medium control section 38 enables the micro-controller 37 to accept the acquisition information among the privilege information 13 from the gate server 9, and notifies that the acquisition information is stored in the media 4.

At step S15, the micro-controller 37 accepts a notification from the medium control section 38, and then instructs the medium control section 38 to download the contents on the basis of the acquisition information 51.

Receiving this, the medium control section 38 reads the relevant contents recording/updating information that is the acquisition information 51 from the relevant contents recording/updating procedure information area 26 of FIG. 2. That is, the medium control section 38 reads "Download from the Internet through the telephone line". Further, the relevant contents identification information that is the acquisition information 51 is read from the relevant contents identification information area 25. That is, "Internet http://www.orikon.co.jp/top10/" is read.

And the contents are downloaded in accordance with the details of the acquisition information 53. That is , the medium control section 38 gains access to http://www.orikon.co.jp/top10/, downloads a file stored in top10, and stores it in the media 4.

Consequently, the details of the media 4 are the blank media with privilege 52 as shown in FIG. 6. That is, 10 songs corresponding to the latest music best 10 are stored in the media 4. For example, the songs of "superficial days", "a friend of the justice" and "squall" are stored with the file names of data1.mp3, data2.mp3 and data3.mp3, respectively.

If the user operates the infrared input device 41 to reproduce the contents, for example, "superficial days", stored in the media 4, the infrared input device 41 sends its operation command to the infrared light receiving section 40.

The infrared light receiving section 40 receives an operation command for reproducing the music "superficial days", and then notifies the micro-controller 37.

The micro-controller 37 instructs the medium control section 38 to reproduce the music "superficial days" in accordance with this operation command.

The medium control section 38 reads the data of "superficial days" from the media 4 in succession, and outputs it to the voice decoding section 45 of the regenerator 31.

Since this data is compressed in accordance with the MPEG Audio Layer3 method, the voice decoding section 45 expands the compressed data and converts it into a voice signal.

Further, the voice signal processing section 46 applies the signal processing to the voice signal for output to the speaker 47.

The user can take delight in listening to the song such as "superficial days" or the like output from the speaker 47.

At step S5, the user sets the media 4 on the media recording/reproducing device 3 again. At this time, the order from the first to tenth place among the popular songs at present may be changed, and a new music may take entry in the first to tenth place.

At step S6, the user inputs an operation command for instructing the procurement of the contents by operating the infrared input device 41 of the media recording/reproducing device 3 as shown in FIG. 3.

The media recording/reproducing device 3 makes connection to the gate server 9 in the same manner as described before.

The steps S7, S8, S12 and S13 are performed in the same manner as described before.

At step S13, the privilege information interpreting means 61 of the gate server 9 as shown in FIG. 4 interprets the privilege information sent thereto, and instructs the contents specifying means 62 to specify the contents corresponding to the latest music best 10.

The contents specifying means 62 reads the media ID acquisition information of the media 4 from the hysteresis information storage means 65. The hysteresis information storage means 65 includes a list of the contents downloaded into the media 4.

The contents specifying means 62 specifies the contents corresponding to the latest music best 10 at present time, and further specifies only the songs not yet downloaded into the media 4. Since the songs not yet downloaded into the media 4 are not charged, the billing information is newly created.

The download preparing means 64 prepares for downloading in the same manner as described before.

At step S14, the privilege information 13 is downloaded into the media 4 in the same manner as described before.

At step S15, the media recording/reproducing device 3 downloads the songs corresponding to the latest music best 10 in accordance with the privilege information 13 newly stored in the media 4.

In this way, since the order is changed, only the songs taking new entry in the best 10 can be downloaded. Then, only the newly downloaded songs are charged for.

Conventionally, the contents have been individually designated and procured. However, in this embodiment, the contents belonging to a designated category can be easily procured only by designating the category of the contents such as designating the latest music best 10. Also, since the media recording/reproducing device 3 records the contents in the media 4 in accordance with the privilege information 13 stored in the media 4 , the user can easily record the contents in the media 4 in accordance with the tastes or needs of the user without performing the operation such as dubbing.

### (Second embodiment)

A second embodiment of the invention will be described below.

In this second embodiment, the user does not purchase the privilege information 13 in the rental shop, but writes the privilege information 13 at one's house 1 on the media 4, employing the media recording/reproducing device 3.

This second embodiment is configured in the same way as the first embodiment.

The operation of this embodiment will be described below mainly with regard to the different points from the first embodiment.

At step S1, the user purchases the blank media as the media 4. The purchased media 4 does not store the privilege information 13.

At step S2, the user does not purchase the privilege information 13 in the rental shop, unlike in the first embodiment.

At step S3, the user sets the media on the media recording/reproducing device 3.

At step S4, the user instructs the connection to the gate server 9 by operating the infrared input device 41.

The infrared input device 41 sends its operation command to the infrared light receiving section 40.

The infrared light receiving section 40 receives the operation command and then notifies the micro-controller 37.

The micro-controller 37 instructs the medium control section 38 to connect to the gate server 9.

The medium control section 38 checks whether or not the privilege information 13 is stored in the media 4 . Currently, the privilege information is not stored in the media 4, and the medium control section 38 makes a request for teaching the address of the gate server 9 to the micro-controller 37.

The micro-controller 37 notifies the address of the gate server 9 to the medium control section 38.

The medium control section 28 sends a connection command to the modem 32 by designating the notified address.

The modem 32 sends the connection command to the gate server 9.

The gate server 9 accepts the connection command, and then permits the connection to the media recording/reproducing device 3.

At step S7, since the privilege information 13 is not stored in the media 4, the routine proceeds to step S9.

At step S9, the Web page providing means 67 of the gate server 9 provides a Web page for creating the privilege information 13 to the media recording/reproducing device 3. The provided Web page is forwarded to the media recording/reproducing device 3 in accordance with the HTTP.

In the media recording/reproducing device 3, the user enters the required data in an input form of the Web page provided from the Web page providing means 67 and creates the privilege information 13.

That is, at step S9, payment means is registered. For example, in the case of credit card payment, its credit number is registered.

At step S10, the billing information of media is updated. That is, since no charge for purchasing the contents has been paid, the billing information of media is uncharged.

At step S11, the user inputs the information of desired contents. That is, a list of conditions for procuring the contents is carried as the selective items in the Web page for input of the privilege information, and the user can prepare the contents selection information by selecting any one of the selective items.

In this way, the user prepares the privilege information 13 by making use of the Web page for preparing the privilege information 13. The prepared privilege information 13 includes the media identifying ID.

The medium control section 38 records the prepared privilege information 13 in the media 4.

The steps S8 to S15 are the same as those of the first embodiment.

In this way, the user can prepare the privilege information 13 in the media 4 at one's house 1.

In this embodiment, the gate server connection area 23 of the media 4 stores the address of the gate server 9 for connection to the gate server 9. However, the invention is not limited thereto. The media 4 may not have the gate server connection area 23, and the media recording/reproducing device 3 may carry the address of the gate server 9. Also, the gate server connection area 23 may store the address of the gate server 9 and the procedure for connecting to the gate server 9, and the medium control section 38 may read and perform its connection procedure to make connection to the gate server 9.

Further, in this embodiment, the communication line 49 is the telephone line 10. However, the invention is not limited thereto. The communication line 49 may be the cable 11 for CATV broadcasting, for example, or the private line.

Further, in this embodiment, the server storing the contents is the Internet server 6. However, this invention is not limited thereto. The contents maybe distributed into plural Internet servers , or stored in the gate server 9 itself.

Further, in this embodiment, the contents are stored in the Internet server 6. However, this invention is not limited thereto. The contents may be stored in the broadcasting station server 7 installed in the broadcasting station. In this case, the relevant contents recording/updatingprocedure information 26 includes the time zone and the channel in which the relevant contents are broadcast. And the billing and other information 27 includes a key for decrypting the scrambled contents to be broadcast. This key is appended as the privilege information 13 by the acquisition information creating means 63 of the gate server 9.

Further, in this embodiment, the contents are stored in the Internet server 6. However, the invention is not limited thereto. The contents may be stored in the rental shop server 8 installed in the rental shop. In this case, the relevant contents identifying information area 25 has a directory for storing the relevant contents for the rental shop server 8. Also, the relevant contents recording/updatingprocedure information area 26 is described to download the contents in the rental shop. The user can take the media 4 to the rental shop, and download the relevant contents of the media 4 from the rental shop server 8.

Further, in this embodiment, the contents to be procured is the music data compressed in accordance with the MPEG Audio Layer3method. However, this invention is not limited thereto. In essence, it is only necessary that the contents may be stored in the media 4 such as movie, news, television program, weather broadcast, or game soft. When the contents have the voice and video, the voice decoding section 45 of the regenerator 31 may decode the voice data , and the video decoding section 42 may decode the video data. When the contents are the game soft, the regenerator 31 maybe replaced with a family computer for executing the game soft.

Further, in this embodiment, the user is charged when the privilege information 13 is purchased, and when the new contents are prepared for procurement. However, this invention is not limited thereto. The user may be charged only when the privilege information 13 is purchased. Also, the user may be charged not when the privilege information 13 is purchased, but only when the preparations for purchasing the contents anew have been completed. Also, the user may be charged when the new contents have been downloaded. Also, the user may be charged in a combination of the above scenes.

Further, in this embodiment, the media 4 is the blank media without storing the contents, when purchased. However, this invention is not limited thereto. The media 4 may be other types which the user employs for other purposes.

Further, in this embodiment, the media 4 are the portable type. However, this invention is not limited thereto. The media 4 may be the recording medium contained in the media recording/reproducing device 3. In this case, the privilege information 13 may not be purchased in the rental shop, but downloaded through the communication with the gate server 9 at one's house 1.

Further, in this embodiment, the media recording/reproducing device 3 communicates via the telephone line 10 with the gate server 9. However, this invention is not limited thereto. The communication may be made wireless, or employing the cable 11 or the private line. Moreover, the communication may be made employing a plurality of communication lines.

Further, in this embodiment, of the privilege information 13, the relevant contents identifying information area 25 includes the information for specifying the location of server for access to the relevant contents. However, this invention is not limited thereto. The name of relevant contents may be stored. Also, the above information may be stored.

Further, in this embodiment, of the privilege information 13, the relevant contents recording/updating procedure information area 26 contains the procedure for procuring the relevant contents. However, this invention is not limited thereto. The information specifying the location of server at which the procedure for procuring the relevant contents is stored may be stored.

Further, the recording medium for storing the conditional information and/or the acquisition information which the contents distribution system of the invention employs may be included within the scope of the invention.

Further, the invention also includes a medium holding a program and/or the data with which the computer can perform part or all of the functions for the contents distribution system, the requesting device and the providing device according to the invention, wherein the medium can be handled on the computer.

Further, the invention also includes an information aggregate which is a program and/or the data with which the computer can perform part or all of the functions for the contents distribution system, the requesting device and the providing device according to the invention.

Further, the "data" as used in the invention includes the data structure, the data format and the kind of data. Also, the "media" as used in the invention include the recording medium such as ROM, the transmission medium for the Internet, and the transmission medium with the light, electric wave or sound wave. The "carrying media" as used in the invention include the recording medium for recording the program and/or data, and the transmission medium for transmitting the program and/or data. "Can be handled on the computer" as used in the inventionmeans that the computer can read the recordingmedium such as ROM, or that the transmission medium can be handled on the computer as a result of the program and/or data being transmitted. Further, a program recording medium holding a program and/or the data with which the computer can perform part or all of the functions for the contents distribution system as described in any one of the above embodiments may be one readable by the computer, in which the read program and/or data can effect the functions in corporation with the computer.

Further, the information aggregate of the invention includes the software such as the program and/or data.

As will be apparent from the above description, this invention can provide a contents distribution system, a requesting device, a providing device, a recording medium, an information aggregate and a medium, in which the contents can be procured by designating a category of the contents.

Also, this invention can provide a contents distribution system, a requesting device, a providing device, a recording medium, an information aggregate and a medium, in which the contents can be simply recorded on the recording medium in accordance with the tastes or needs.

## Claims

1. A contents distribution system comprising a requesting device for making a request for distribution of the contents, and a providing device for providing the contents in accordance with said request from said requesting device, **characterized in that**;
said requesting device reads the conditional information from the recording medium storing said conditional information for choosing the contents;
said read conditional information is sent directly or indirectly to said providing device; and
said providing device chooses and specifies the contents in accordance with said sent conditional information to prepare said requesting device to download the contents.

2. The contents distribution system according to claim 1, **characterized in that** if said requesting device makes a request, said specified contents are sent from said contents providing device to said requesting device.

3. The contents distribution system according to claim 1, **characterized in that** said providing device sends said specified contents to said requesting device.

4. The contents distribution system according to any one of claims 1 to 3, **characterized in that** said conditional information has been stored when said recording medium is purchased.

5. The contents distribution system according to any one of claims 1 to 3, **characterized in that** said conditional information is stored directly in said recording medium by the user.

6. The contents distribution system according to any one of claims 1 to 5, **characterized in that** the acquisition information for acquiring said specified contents is stored in said recording medium.

7. The contents distribution system according to claim 6, **characterized in that** said acquisition information is sent from said providing device.

8. The contents distribution system according to claim 7 or 8, **characterized in that** said acquisition information is the information containing at least one of the billing information of said specified contents, the privilege term information that is the time limit till which said specified contents can be downloaded, and the location information indicating the location at which said specified contents are stored.

9. The contents distribution system according to any one of claims 1 to 8, **characterized in that** when the same conditional information is sent multiple times from said requesting device, said providing device selects and specifies only the contents different from the previously specified contents.

10. The contents distribution system according to any one of claims 1 to 9, **characterized in that** said providing device is capable to interpret said conditional information.

11. The contents distribution system according to any one of claims 1 to 10, **characterized in that** said recording medium is detachably mounted on said requesting device.

12. The contents distribution system according to any one of claims 1 to 10, **characterized in that** said recording medium is incorporated into said requesting device.

13. A requesting device for making a request for distribution of the contents, comprising:
reading means of reading the conditional information from the recording medium storing said conditional information for choosing the contents; and
sending means of sending said read conditional information directly or indirectly to said providing device for providing the contents;
**characterized in that** said contents providing device chooses and specifies the contents in accordance with said sent conditional information to prepare said requesting device to download the contents.

14. A providing device for providing the contents, comprising:
specifying means of choosing and specifying the contents in accordance with the conditional information sent from a requesting device, having reading means of reading the
conditional information from the recording medium storing said conditional information for choosing the contents, and
sending means of sending said read conditional information directly or indirectly to said providing device; and
preparing means of preparing said requesting device to download the specified contents.

15. A recording medium storing the conditional information for selecting the contents, wherein
said conditional information is read by a requesting device for making a request for distribution of the contents;
said read conditional information is sent directly or indirectly to a providing device for providing the contents; and
said providing device chooses and specifies the contents in accordance with said sent conditional information to prepare said requesting device to download the contents.

16. A medium holding a program and/or the data with which the computer can perform part or all of the functions for said contents distribution system, said requesting device and said providing device according to any one of claims 1 to 15, **characterized in that** said medium can be handled on the computer.

17. An information aggregate which is a program and/or the data with which the computer can perform part or all of the functions for said contents distribution system, said requesting device and said providing device according to any one of claims 1 to 15.
